# EUROPÄISCHE PATENTSCHRIFT

(11) **EP 3 525 953 B1**
(45) Veröffentlichungstag und Bekanntmachung des Hinweises auf die Patenterteilung: **02.12.2020**
(21) Anmeldenummer: 17784631.8
(22) Anmeldetag: 13.10.2017
(51) Int. Cl.: B21D 37/14

(54) **VERFAHREN ZUM EINARBEITEN EINES UMFORMWERKZEUGES UNTER VERWENDUNG VON TUSCHIERFARBE**
METHOD FOR WORKING IN A FORMING TOOL USING MARKING PAINT
PROCÉDÉ D'AJUSTAGE D'UN OUTIL DE FORMAGE À L'AIDE D'UNE MATIÈRE DE DRESSAGE

(30) Priorität: 13.10.2016 DE 102016119528
(43) Veröffentlichungstag der Anmeldung: 21.08.2019
(73) Patentinhaber: Fraunhofer-Gesellschaft zur Förderung der angewandten Forschung e.V., 80686 München (DE)
(72) Erfinder: KORIATH, Hans-Joachim, 09123 Chemnitz (DE); HOFFMANN, Michael, 09306 Königshain-Wiederau (DE)
(74) Vertreter: Grünecker Patent- und Rechtsanwälte PartG mbB
(86) Internationale Anmeldenummer: PCT/EP2017/076211
(87) Internationale Veröffentlichungsnummer: WO 2018/069511

(56) Entgegenhaltungen:
- DE-A1- 10 103 555
- DE-A1-102012 011 893
- DE-A1-102014 015 473
- DE-B- 1 043 858

## Beschreibung

Die Erfindung bezieht sich auf ein Verfahren zum Einarbeiten eines Umformwerkzeuges unter Verwendung von Tuschierfarbe.

Die Formgebung von Blechteilen mit zweiseitiger Formspeicherung wird durch das konventionelle Tiefziehen mit starrem Ober- und Unterwerkzeug einschließlich Niederhalter realisiert. Das Tiefziehen entspricht einem Zugdruckumformvorgang, bei dem aus ebenen Blechplatinen dreidimensionale Blechteile gefertigt werden, ohne die Blechdicke gewollt zu verändern. Zum Erreichen eindeutiger Ausgangsbedingungen ist es notwendig, das Spaltmaß zwischen den zu paarenden dreidimensionalen Werkzeugoberflächen so einzustellen, dass es innerhalb einer vorgebbaren Toleranz mit der Dicke des umzuformenden Bleches übereinstimmt.

Insbesondere bei der Einarbeitung von großflächigen Umformwerkzeugen, die eine hohe Formgenauigkeit der korrespondierenden Werkzeugoberflächen erfordern, ist es bekannt, zum Identifizieren eines nachzubearbeitenden Flächenbereiches einer Werkzeugoberfläche zunächst einen Tuschiervorgang zwischen Ober- und Unterwerkzeug in einer Tuschier- oder Erprobungspresse (Try-Out-Presse) durchzuführen. Hierzu wird in einem ersten Arbeitsschritt eine Blechplatine dünn und gleichmäßig mit einer pastenförmigen (typischerweise blauen) Tuschierfarbe (z.B. mittels einer Rolle oder eines Pinsels) bestrichen. Die bestrichene Blechplatine wird anschließend in die Try-Out-Presse eingelegt und zwischen den beiden Werkzeughälften des Umformwerkzeuges gepresst bzw. tiefgezogen. Im Laufe des Umformprozesses verteilt sich die Tuschierfarbe im Fügespalt und hinterlässt - je nach vorliegender Spaltbreite - sowohl auf dem Umformwerkzeug als auch auf dem Tiefziehblech unterschiedliche Farbschichtdicken.

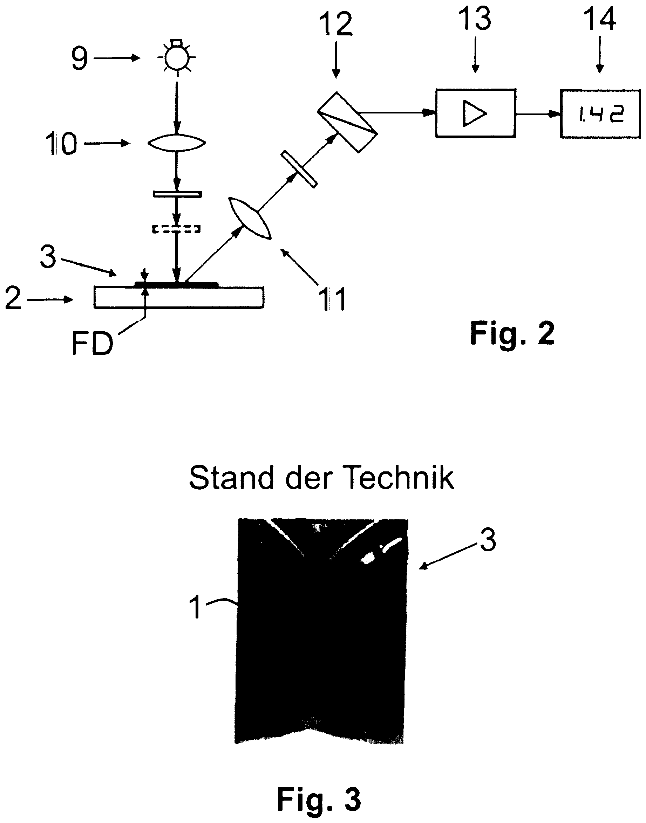

Anhand des vom tuschierten Blechteils auf der jeweiligen Werkzeugoberfläche hinterlassenen dreidimensionalen Druckbildes kann ein geschulter Werkzeugmacher subjektiv die Flächenbereiche mit zu hoher Flächenpressung identifizieren. Ein Beispiel für ein dreidimensionales Druckbild 3, das bei einem solchen konventionellen Tuschiervorgang auf der Oberfläche eines Umformwerkzeuges entsteht, ist in Fig. 3 exemplarisch als Fotografie wiedergegeben. Das dreidimensionale Druckbild 3 wird auch als sogenanntes Tragbild bezeichnet und zeigt in Fig. 3 ein deutlich inhomogenes Aussehen. Flächenbereiche mit einem Farbabdruck geringer Farbintensität üben eine zu hohe Flächenpressung aus und müssen daher in einem nachfolgenden zweiten Arbeitsschritt durch eine vorwiegend in Handarbeit vom Werkzeugmacher, z.B. mittels Schleifens oder Schabens, ausgeführte Oberflächenbearbeitung mechanisch abgetragen werden. Die vorgenannten ersten und zweiten Arbeitsschritte müssen so lange wiederholt werden, bis ein zufriedenstellendes Tragbild und damit ein akzeptabler Werkzeugspalt eingestellt ist.

Das vorbeschriebene, konventionelle Einarbeiten eines Umformwerkzeuges mittels Tuschierens und anschließendem manuellen Schleifen bzw. Schaben ist sehr zeitaufwendig, kostenintensiv und nicht eindeutig reproduzierbar. Zudem ist dafür hochqualifiziertes und erfahrenes Personal notwendig. Ein objektives Mess- und Bewertungsverfahren fehlt hingegen.

Zwar gehören 3D-Koordinatenmessmaschinen zum Vermessen von Fertigungsabweichungen der Werkzeugform im Mikrometerbereich zum Stand der Technik. Deren Verwendung ist aber mit einem zeitaufwendigen Aus- und Einbau der Umformwerkzeuge aus der bzw. in die Try-Out-Presse verbunden. Auch kann die Schichtdicke der als Tuschierfarbe eingesetzten amorphen Farbpaste mit einer solchen Maschine nicht taktil ermittelt werden.

*Aus der* DE 10 2014 015 473 A1 *geht ein Verfahren zum Erfassen von Kontaktstellen, an welchen ein Werkzeug zum Bearbeiten eines Bauteils das Bauteil beim Bearbeiten berührt, hervor. In einem ersten Schritt wird zumindest ein Teilbereich wenigstens eines der Elemente mit einer Tuschierfarbe versehen, welche bei einem Kontakt des anderen Elements mit der Tuschierfarbe an das andere Element übertragen wird. In einem zweiten Schritt wird das Bauteil mittels des Werkzeugs bearbeitet, wobei das Werkzeug mit dem Bauteil an den Kontaktstellen in Kontakt, das heißt in Berührung kommt. In einem dritten Schritt wird wenigstens ein digitales Bild zumindest des Teilbereichs nach dem Bearbeiten erfasst.*

Die DE 1 043 858 B beschreibt eine Vorrichtung zum Abschleifen der durch Tuschieren kenntlich gemachten erhöhten Punkte von Gleitflächen. Eine lichtoptische Abtastung farbig markierter Oberflächen steuert den Vorschub einer Schleifvorrichtung. Im Gegensatz zu annähernd beliebig dreidimensional geformten Werkzeugoberflächen sind Gleitflächen aber eben oder mit einer definierten Krümmung versehen, sodass diese bekannte Vorrichtung nicht ohne Weiteres bei der schleiftechnischen Einstellung von Umformwerkzeugen Verwendung finden kann.

Aus der DE 101 03 555 A1 ist ein Verfahren zur schnellen Beurteilung der Farbschicht einer lackierten Karosserie bekannt, welches Farbabweichungen oder sonstige Fehler sicher erkennt, wobei die Farbschicht von einer Lichtquelle mit Licht bestrahlt wird und von einem optischen Empfangsmittel wenigstens ein Teil des von der Lichtquelle an der Farbschicht reflektierten Lichts als zweidimensionale Bildpunktinformation empfangen wird. Eine Anwendung dieses Verfahrens auf die Analyse von beim Tuschieren entstehenden dreidimensionalen Werkzeugdruckbildern ist jedoch in diesem vorbekannten Stand der Technik weder angedacht noch daraus ableitbar.

Die DE 10 2012 011 893 A1 beschreibt ein Verfahren und eine Vorrichtung zum Tuschieren eines Werkzeuges in einer Presse, wobei das Tuschierbild mittels einer drucksensitiven Sensorschicht erfasst wird. Eine solche drucksensorische Erfassung kann jedoch eine visuelle Erfassung nur unzureichend ersetzen, da die Sensorschicht gegenüber mechanischen Verschleißspuren (wie Rissen oder Falten) sehr empfindlich und daher fehleranfällig ist.

Der Erfindung liegt daher die Aufgabe zugrunde, ein Verfahren zum Einarbeiten eines Umformwerkzeuges unter Verwendung von Tuschierfarbe anzugeben, das auf zuverlässige und möglichst einfache Weise eine wesentliche Objektivierung und Automatisierung des Tuschier- und anschließenden Nachbearbeitungsvorganges unter Vermeidung subjektiver, manueller Arbeitsschritte gestattet.

Die vorgenannte Aufgabe wird erfindungsgemäß durch ein Verfahren mit den Merkmalen des Anspruchs 1 gelöst. Weitere vorteilhafte Ausführungsbeispiele der Erfindung sind Gegenstand der Unteransprüche.

Im Einzelnen umfasst ein erfindungsgemäßes Verfahren zum Einarbeiten eines Umformwerkzeuges unter Verwendung von Tuschierfarbe die folgenden Schritte:
a) Umformen einer unbestrichenen Blechplatine mittels des Umformwerkzeuges zu einem ersten dreidimensionalen Blechteil ohne dreidimensionales Druckbild,
b) Umformen einer gleichmäßig mit Tuschierfarbe bestrichenen Blechplatine mittels des Umformwerkzeuges zu einem zweiten dreidimensionalen Blechteil mit einem dreidimensionalen Druckbild,
c) Aufnehmen eines zweidimensionalen Referenzfarbbildes von dem ersten dreidimensionalen Blechteil und Aufnehmen eines zweidimensionalen Farbbildes von dem zweiten dreidimensionalen Blechteil mittels einer Bildaufnahmeeinrichtung,
d) Korrigieren des zweidimensionalen Farbbildes unter Verwendung des zweidimensionalen Referenzfarbbildes,
e) Zuordnen von Objektbereichen des korrigierten zweidimensionalen Farbbildes zu Objektklassen mittels einer Bildverarbeitungseinrichtung,
f) Messen der Farbschichtdicken des dreidimensionalen Druckbildes in allen klassifizierten Objektbereichen mittels eines Densitometers,
g) Übertragen der gemessenen Farbschichtdicken in ein Modell des herzustellenden dreidimensionalen Blechteils als topografische Erhebungen,
h) Nachbearbeiten des Umformwerkzeuges entsprechend den Höhen der topografischen Erhebungen zur Verbesserung des dreidimensionalen Druckbildes.

Beim konventionellen Tuschieren ist eine Korrelation zwischen den Farbunterschieden und der vorliegenden Farbschichtdicke und somit dem vorliegenden Werkzeugspalt (Abstand zwischen den Werkzeugwirkflächen) weitestgehend dem Erfahrungswissen des Werkzeugmachers überlassen und nicht direkt messbar. Das erfindungsgemäße Verfahren bietet hier Abhilfe, indem eine Korrelation zwischen relativen Farbunterschieden und der Schichtdicke der Tuschierfarbe in klassifizierten Objektbereichen als Funktion darstellbar und somit vergleichbar wird. Ermöglicht wird dies durch eine densitometrische Messung der Farbdichte einer tuschierten Oberfläche des dreidimensional umgeformten Blechteils in allen vorab anhand eines zweidimensionalen Farbbildes klassifizierten Objektbereichen.

Densitometer kommen bislang ausschließlich auf dem Gebiet der Reproduktions- und Drucktechnik als Dichtemessgeräte für Druckfarbe (Auflichtdensitometer) und Filmschwärzung (Durchlichtdensitometer) zur Anwendung. Das erfindungsgemäße Verfahren sieht hingegen erstmals eine densitometrische Messung der Schichtdicke der Tuschierfarbe auf der dreidimensionalen Blechoberfläche vor. Eine Korrektur des von der jeweiligen tuschierten Oberfläche des dreidimensional umgeformten Blechteils aufgenommenen zweidimensionalen Farbbildes durch Abgleich mit einem zweidimensionalen Referenzfarbbild der jeweiligen, nicht mit Tuschierfarbe bedruckten dreidimensionalen Blechoberfläche, erlaubt ein fehlerfreies optisches Erfassen der zugehörigen Werkzeugoberfläche bzw. der Tuschierfarbe, ohne länger auf das (z. B. aufgrund von Spiegelungen der Werkzeugoberfläche oder von wechselnden Umgebungslichtbedingungen) fehlerbehaftete subjektive Interpretieren des Druckbildes durch den Werker angewiesen zu sein. Die Farbinformation des korrigierten zweidimensionalen Farbbildes ermöglicht somit die Zuordnung von Objektbereichen gleicher Schichtdicke.

Basierend auf den densitometrisch gemessenen Farbschichtdicken und einem Modell des herzustellenden Blechteils wird ein topografisches Bild der tuschierten Blechoberfläche und somit des aktuell im Umformwerkzeug vorliegenden Werkzeugspaltes erzeugt. Anhand dieses topografischen Bildes erfolgt in einem abschließenden Schritt die (z. B. schleifende oder schabende) Nachbearbeitung des Umformwerkzeuges, indem die Höhen der ermittelten topografischen Erhebungen als Maß für die abzutragenden Höhen an Werkzeugwerkstoff herangezogen werden. Im Gegensatz zur konventionellen Werkzeugeinarbeitung, bei der die manuelle Nacharbeit der identifizierten Flächenbereiche, insbesondere das Maß eines Höhenabtrages, ganz dem subjektiven Ermessen des jeweiligen Werkers unterliegt, kann durch das erfindungsgemäße Verfahren somit der geforderte Werkzeugspalt bereits nach wenigen Versuchsdurchgängen (idealerweise einem Versuchsdurchgang) genau eingestellt werden. Im Ergebnis wird somit vom erfindungsgemäßen Verfahren ein qualitativ hochwertiges Arbeitsergebnis auf rationelle Art und Weise bereitgestellt.

Vorzugsweise wird in den Schritten a) und b) die Blechplatine in einer Presse, insbesondere einer Tuschier- bzw. Erprobungspresse, zwischen einem auf einem Untergestell angeordneten Unterwerkzeug und einem an einem Pressenoberteil angeordneten Oberwerkzeug zu dem dreidimensionalen Blechteil tiefgezogen, wobei während des Tiefziehvorganges das Blech von einem Niederhalter fixiert wird.

Das erfindungsgemäße Verfahren kommt insbesondere beim Einarbeitungsprozess eines vorbeschriebenen Tiefziehwerkzeuges vorteilhaft zur Geltung. Bisher war man bei der Konstruktion solcher Tiefziehwerkzeuge neben der FEM-Simulation auf das Erfahrungswissen spezialisierter Mitarbeiter und aufwendige Versuchsdurchführungen mit entsprechenden Werkzeugänderungen angewiesen. Durch das erfindungsgemäße Verfahren kann der Farbabdruck auf den Werkzeugoberflächen eines Unter- und/oder Oberwerkzeuges durch den Einsatz einer densitometrischen Methode objektiv und reproduzierbar ausgewertet werden und in Abhängigkeit der erfassten Farbschichtdicken die Lage und die Dimension der nachzuarbeitenden Flächenbereiche sowie das jeweils abzutragende Werkzeugaufmaß exakt bestimmt werden. Dadurch kann der Try-Out-Prozess zum Erstellen eines homogenen Druckbildes bei einem Tiefziehwerkzeug mit einem Unter- und einem Oberwerkzeug sowie wenigstens einem am Unter- und/oder am Oberwerkzeug gelagerten Niederhalter kosten- und zeitsparend optimiert werden.

In weiter bevorzugter Weise wird das dreidimensionale Blechteil zum Aufnehmen des zweidimensionalen Farbbildes und Referenzfarbbildes im Schritt c) auf einen ebenen Spiegel gelegt, der senkrecht zur optischen Achse der Bildaufnahmeeinrichtung verläuft.

Der ebene Spiegel ist im Lot zur homogenen Beleuchtung und zum zweidimensionalen Farbbild angeordnet. Die Beleuchtungsintensität sowie der Streuungs- und/ oder Reflexionsgrad der unbedruckten Blechoberfläche wird in einem Referenzfarbbild des ebenen Spiegels erfasst und zur Korrektur des zweidimensionalen Farbbildes verwendet.

Des Weiteren ist bevorzugt vorgesehen, dass das zweidimensionale Farbbild und Referenzfarbbild im Schritt c) bei derselben homogenen Beleuchtung aufgenommen werden.

Die Verwendung einer homogenen Koaxialbeleuchtung ermöglicht eine sehr gleichmäßige Ausleuchtung mit minimalen Glanzpunkten. Diese Art der Beleuchtung eignet sich besonders für unebene Oberflächen, die ein ausgeprägtes dreidimensionales Erscheinungsbild aufweisen, wie dies bei Oberflächen von Werkzeugaktivteilen regelmäßig der Fall ist. Indem bei der Aufnahme des Referenzfarbbildes von der Blechoberfläche ohne Druckbild und bei der Aufnahme des Farbbildes von der Blechoberfläche mit Druckbild dieselbe Beleuchtung verwendet wird, lassen sich fehlerhafterweise vorhandene Beleuchtungsgradienten ausgleichen und somit Glanzlichter oder Schatten und dadurch hervorgerufene Schwankungen in den Messergebnissen beseitigen.

Außerdem ist besonders bevorzugt vorgesehen, dass im Schritt d) Farbunterschiede innerhalb des zweidimensionalen Farbbildes, die sich aufgrund unterschiedlicher Beleuchtungsintensität und/oder aufgrund unterschiedlicher Streuungs- und/oder Reflexionseigenschaften der Oberfläche des dreidimensionalen Blechteils und/oder aufgrund unterschiedlicher Brechung und/oder Reflexion der Tuschierfarbe ergeben, ausgeglichen werden.

Die Tatsache, dass sich bei unterschiedlich gekrümmten Oberflächenbereichen auch der Einfallswinkel der von der Lichtquelle ausgehenden Beleuchtungsstrahlen auf diese Oberflächenbereiche ändert, beeinflusst das densitometrische Messergebnis. Um dennoch eine zuverlässige Messung der Farbschichtdicke realisieren zu können, wird durch eine Kalibrierung unter Verwendung eines Referenzfarbbildes der sauberen (nicht mit Tuschierfarbe bedruckten) Blechoberfläche der Einfluss der unterschiedlichen Oberflächenkrümmungen und somit der unterschiedlichen Einfallswinkel auf das Messergebnis weitestgehend eliminiert. Weiter kann das Densitometer auf die optischen Eigenschaften (wie Brechungsindex, Transmissions-, Reflexions- und Absorptionsgrad) der jeweils verwendeten Tuschierpaste kalibriert werden, um zu vermeiden, dass sich diese Eigenschaften auf die gemessene Farbdichte verfälschend auswirken.

In einer weiteren besonders bevorzugten Ausführungsform der Erfindung zerlegt die Bildverarbeitungseinrichtung im Schritt e) das korrigierte zweidimensionale Farbbild in Bildelemente, fasst benachbarte Bildelemente mit gleichen Eigenschaften zu Objektbereichen zusammen und leitet aus den Objektbereichen Klassifikationsmerkmale ab, anhand derer die Objektbereiche vordefinierten Objektklassen zugeordnet werden.

Mit einer derartigen automatischen Bildauswertung erfolgt die Zuordnung kleiner Bildelemente zu Objektklassen mit Hilfe von Klassifikationsmerkmalen, die z.B. aufgrund statistischer Werte der Objektbereiche abgeleitet sind. Diese Klassen können z. B. Regionen der abgebildeten Werkzeugoberfläche sein, die sich aufgrund gleichartiger Charakteristika entsprechen. Anschließend muss nur noch in diesen klassifizierten Regionen durch ein entsprechend positioniertes und orientiertes Densitometer die Farbdichte des Druckbildes gemessen werden. Somit werden gegenüber einem Messverfahren, bei dem die gesamte Ausdehnung der bedruckten Werkzeug- oder Werkstückoberfläche densitometrisch erfasst werden muss, eine Kostenverringerung und ein verringerter Messaufwand zur Ermittlung der Farbschichtdicken realisiert.

In noch einer weiteren besonders bevorzugten Ausführungsform der Erfindung sind der Farbort und die Pigmentkonzentration der Tuschierfarbe normierte feste Größen, wobei die im Schritt f) gemessene Farbschichtdicke als einzige variable Größe die Farbdichte des dreidimensionalen Druckbildes beeinflusst.

Somit kann das Maß der vom genormten Densitometer erfassten relativen Farbdichte als Korrelat für die Farbschichtdicke verwendet werden. Die Farbschichtdicke dient wiederum als indirekte Messgröße für das im Umformwerkzeug vorliegende Spaltmaß (z. B. zwischen den Formwerkzeughälften), wobei Abweichungen zu einem vorgegebenen Spaltmaß (das üblicherweise der zu verarbeitenden Blechdicke entspricht) errechnet und In eine Steuerung einer Bearbeitungsvorrichtung zur Bearbeitung des Werkzeuges überführt werden. Auf diese Weise können der Ort und die abzutragende Materialstärke direkt an die Bearbeitungsvorrichtung, beispielsweise eine Fräse, eine Schleifmaschine und/oder eine Poliermaschine, geleitet werden. Diese kann im Anschluss daran das Werkzeug, insbesondere die jeweilige Werkzeughälfte, also Ober- und/oder Unterwerkzeug bzw. deren Oberflächen, bearbeiten.

Insbesondere ist nach einer weiteren Ausführungsform vorgesehen, dass im Schritt f) das Densitometer im Lot zur zu vermessenden Oberfläche ausgerichtet und die Messung der Farbschichtdicke als relative Messung durch Vergleich des jeweiligen Messstromes mit einem Referenzwert, insbesondere ermittelt bei Remission eines Absolutweiß, realisiert wird.

Folglich kann das Densitometer mittels einer Verfahreinrichtung in horizontaler Richtung über das zu vermessende dreidimensionale Druckbild bewegt werden, wobei die optische Achse des Densitometers senkrecht zur Bildfläche verläuft, um die jeweils in dieser senkrechten Richtung vorliegende Farbschichtdicke zu bestimmen. Durch Kopplung der Verfahreinrichtung mit der Bildverarbeitungseinrichtung kann das Densitometer zu allen vorab anhand des zweidimensionalen Farbbildes klassifizierten Objektbereichen des dreidimensionalen Druckbildes zwecks Vermessung der dortigen Farbschichtdicken bewegt werden. Die Elektronik des Densitometers vergleicht den jeweiligen Messstromwert mit einem Referenzwert (Remission eines Absolutweiß). Die Differenz dieser beiden Werte bildet die Grundlage für die Errechnung des Absorptionsverhaltens der vermessenen Farbschicht, wobei auf dem Display des Densitometers die gemessene Farbdichte erscheint, die wiederum ein relatives Maß für die Farbschichtdicke ist.

Weitere Einzelheiten und Vorteile des erfindungsgemäßen Verfahrens ergeben sich aus den Ansprüchen sowie dem Ausführungsbeispiel, das anhand der nachfolgenden Zeichnungen näher erläutert wird. Dabei zeigen:
- Fig. 1: schematische Darstellung einer zweidimensionalen Bildaufnahme von einem unter Verwendung von Tuschierfarbe erzeugten dreidimensionalen Druckbild,
- Fig. 2: schematische Darstellung einer densitometrischen Vermessung des dreidimensionalen Druckbildes und
- Fig. 3: Fotografie eines auf einer Werkzeugoberfläche unter Verwendung von Tuschierfarbe erzeugten Druckbildes.

Das erfindungsgemäße Verfahren kann insbesondere bei der Einarbeitung eines Tiefziehwerkzeuges bestehend aus einem starren Ober- und Unterwerkzeug einschließlich Niederhalter vorteilhaft zur Anwendung gelangen. Zum Tiefziehen wird eine ebene Blechplatine in einer Presse zwischen dem auf einem Untergestell fest angeordneten Unterwerkzeug und dem an einem Pressenoberteil angeordneten Oberwerkzeug durch einen Prozess der Zugdruckumformung zum gewünschten dreidimensionalen Blechteil verarbeitet. Der Rand des Bleches wird während des Tiefziehvorganges zwischen dem mindestens einen Niederhalter und dem Ober- oder Unterwerkzeug eingespannt.

Die zu paarenden, formgebenden dreidimensionalen Werkzeugoberflächen des Ober- und Unterwerkzeuges sollen in einer Schließendstellung (Enddruck) relativ zueinander einen Abstand (Werkzeugspalt) aufweisen, der innerhalb eines Toleranzbereiches der zu verarbeitenden Blechdicke, die während des Tiefziehprozesses möglichst konstant bleiben soll, entspricht. Um die Kontaktflächen der Krafteinleitung sichtbar zu machen, ist es bekannt, in einer Try-Out-Presse eine Farbpaste zur Visualisierung für die spätere manuelle Nacharbeit einzusetzen. Hierzu wird die Blechplatine ein- oder beidseitig mit einer Tuschierfarbe 1 bestrichen und anschließend in der Try-Out-Presse einem Tiefziehvorgang unterworfen. Als Ergebnis hinterlässt die Tuschierfarbe 1 auf den Werkzeugoberflächen des Unter- und/oder Oberwerkzeuges in Abhängigkeit der während des Tiefziehvorganges zwischen dem bestrichenen Blech und den Werkzeughälften bestehenden Kontaktverhältnisse ein charakteristisches dreidimensionales Druckbild 3 (auch Tragbild oder Tuschierbild genannt), welches als Fotografie in Fig. 3 beispielhaft für ein Oberwerkzeug wiedergegeben ist.

Anhand des Farbabdruckes des tuschierten Blechteils auf der jeweiligen Werkzeugoberfläche (gemäß Fig. 3) können die Flächenbereiche mit zu hoher Flächenpressung identifiziert werden. Demnach üben Flächenbereiche mit einem Farbabdruck geringer Farbintensität eine zu hohe Flächenpressung aus und müssen in einem zweiten Arbeitsschritt durch eine entsprechende Oberflächenbearbeitung nachbearbeitet werden. Ziel ist es, als Indiz dafür, dass sich die eingeleitete Presskraft gleichmäßig auf der gesamten Blechoberfläche verteilt, ein möglichst homogenes Druckbild 3 einzustellen. Dies setzt aber mehrere Versuchsdurchgänge voraus, nach denen das erhaltene Druckbild 3 jeweils überprüft und das Werkzeug entsprechend nachbearbeitet werden muss.

Im Ergebnis ist der vorbeschriebene konventionelle Einarbeitungsprozess zum einen äußerst zeitaufwendig, was sich um so stärker negativ bemerkbar macht, je kleiner die Produktionsstückzahlen sind, und zum anderen unterliegt die Identifizierung der nachzubearbeitenden Flächenbereiche und das Maß der durchzuführenden Nachbearbeitung allein der subjektiven Beurteilung durch den jeweiligen Werker. Reflexionen, die durch die spiegelnden metallischen Werkzeugoberflächen verursacht werden, machen aber ein fehlerfreies, rein visuelles Erfassen des Druckbildes 3 bei Tages- bzw. Hallenlicht nahezu unmöglich, wodurch auch das Ergebnis der Nachbearbeitung des Werkzeuges negativ beeinflusst wird.

Unter Bezugnahme auf die beigefügten Figuren werden im Folgenden die bei einem bevorzugten Ausführungsbeispiel des erfindungsgemäßen Verfahrens zur Einarbeitung eines Tiefziehwerkzeuges angewandten Verfahrensschritte im Einzelnen erläutert:
In einem ersten Verfahrensschritt wird als Referenz eine blanke, nicht mit Tuschierfarbe bestrichene ebene Blechplatine in einem vorbeschriebenen Tiefziehwerkzeug, das in einer Try-Out-Presse eingespannt ist, zu einem dreidimensionalen Blechteil ohne dreidimensionales Druckbild umgeformt.

In einem zweiten Verfahrensschritt wird vor dem Tiefziehen auf die umzuformende ebene Blechplatine ein- oder beidseitig eine dünne und gleichmäßige Schicht einer zumeist als Paste vorliegenden Tuschierfarbe 1 aufgebracht (z.B. manuell mittels Rolle/Pinsel oder maschinell mittels einer Auftragseinrichtung). Die derart tuschierte Blechplatine wird daraufhin in gleicher Weise wie im vorangegangenen Schritt die nicht tuschierte Blechplatine in der Try-Out-Presse zur Herstellung des dreidimensionalen Blechteils 2 tiefgezogen. Im Laufe des Tiefziehvorganges verteilt sich die Tuschierfarbe 1 im Fügespalt zwischen Blech und Werkzeug und hinterlässt unterschiedliche Schichtdicken. In Abhängigkeit von der vorliegenden Spaltbreite und somit von der vorliegenden Flächenpressung wird nach dem Tiefziehvorgang auf der eintuschierten Blechoberfläche ein charakteristisches dreidimensionales Druckbild 3 erzeugt, das in den nachfolgenden Verfahrensschritten ausgewertet und zur Nachbearbeitung des Tiefziehwerkzeuges herangezogen wird.

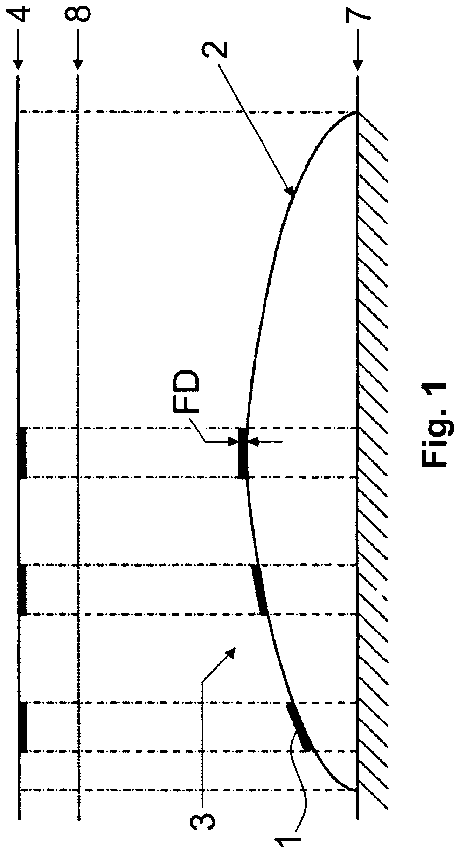

In einem dritten Verfahrensschritt werden sowohl vom tiefgezogenen Blechteil ohne Druckbild als auch vom tiefgezogenen Blechteil 2 mit dreidimensionalem Druckbild 3 mittels einer elektronischen Bildaufnahmeeinrichtung (z. B. einer Digitalkamera) zweidimensionale Farbbilder 4 aufgenommen. Fig. 1 zeigt schematisch die Bildaufnahme für die Umsetzung des dreidimensionalen Druckbildes 3 auf dem tiefgezogenen Blechteil 2 in ein weiterzuverarbeitendes zweidimensionales Farbbild 4. Die Bildaufnahmeeinrichtung ist im Abstand oberhalb des aufzunehmenden Druckbildes 3 des dreidimensional geformten Blechteils 2 angeordnet, wobei die optische Achse der Bildaufnahmeeinrichtung senkrecht zur horizontalen Haupterstreckungsrichtung des Blechteils 2 ausgerichtet ist. In Fig. 1 ist aus Darstellungsgründen nur das von der Bildaufnahmeeinrichtung aufgenommene zweidimensionale Farbbild 4 mit den auf einem horizontalen Bedruckstoff aufgebrachten Farbschichten dargestellt. Das dreidimensionale Blechteil ohne Druckbild und das dreidimensionale Blechteil 2 mit Druckbild 3 sollen unter derselben homogenen Beleuchtung 8 aufgenommen werden, um die im nachfolgenden Verfahrensschritt beschriebene Kalibrierung zu ermöglichen.

In einem vierten Verfahrensschritt wird das zweidimensionale Farbbild 4 der mit dem dreidimensionalen Druckbild 3 versehenen Blechoberfläche mit dem Referenzfarbbild der geometrisch korrespondierenden, aber blanken (nicht mit Tuschierfarbe bedruckten) Blechoberfläche korrigiert. Mit dieser Korrektur werden auf die spätere densitometrische Messung Einfluss nehmende Störfaktoren (z. B. entlang der Blechoberfläche variierende Reflexionseigenschaften aufgrund unterschiedlich gekrümmter Oberflächenbereiche oder optische Inhomogenitäten aufgrund von Beleuchtungsfehlern oder aufgrund von variierender Brechung und Reflexion der Tuschierpaste) kompensiert und somit die anschließende Messgenauigkeit erhöht.

In einem fünften Verfahrensschritt wird das in vorbeschriebener Weise korrigierte zweidimensionale Farbbild 5 einer Bildverarbeitung durch eine Bildverarbeitungseinrichtung unterzogen. Hierzu wird das korrigierte zweidimensionale Farbbild 5 mit vorab definierten Objektklassen verglichen, wobei das Farbbild 5 zunächst in Bildelemente zerlegt, benachbarte Bildelemente mit gleichen Eigenschaften (wie Farbe, Helligkeit, Form u. dgl.) zu Objektbereichen zusammengefasst und von den Objektbereichen Klassifikationsmerkmale abgeleitet werden. Abschließend werden die Objektbereiche anhand dieser Merkmale den vorhandenen Objektklassen zugewiesen. Eine derartige Bildverarbeitung ermöglicht, den im Anschluss daran für die Beschaffung der Farbschichtdicken FD zu betreibenden Messaufwand deutlich zu reduzieren, da nicht mehr alle Punkte des Druckbildes, sondern nur alle klassifizierten Objektbereiche sensorisch erfasst werden müssen.

In einem sechsten Verfahrensschritt wird gemäß Fig. 2 ein Densitometer 6 in allen vorab durch die Bildauswertung klassifizierten Objektbereichen jeweils senkrecht zur Oberfläche des dreidimensionalen Druckbildes 3 ausgerichtet, um die in diesen Bereichen vorliegende Farbschichtdicke FD relativ zu messen. Die technischen Limitationen des Densitometers 6, die sich z.B. aus einer Abhängigkeit seiner Messergebnisse vom Einfallswinkel der Lichtquelle 9 und somit von der Krümmung der analysierten Oberfläche und aus einer Abhängigkeit seiner Messergebnisse von der Brechung und Reflexion der verwendeten Tuschierpaste ergeben, werden durch die vorgelagerte Korrektur des zweidimensionalen Farbbildes 4 mit dem zweidimensionalen Referenzfarbbild der unbedruckten Blechoberfläche umgangen.

Das Messprinzip des Densitometers 6 ist in Fig. 2 exemplarisch dargestellt. Von einer stabilisierten Lichtquelle 9 fällt das Licht durch eine Optik 10 gebündelt auf die mit Tuschierfarbe 1 bedruckte Oberfläche des dreidimensionalen Blechteils 2. Je nach Farbschichtdicke FD und Pigmentierung der Tuschierfarbe 1 im dreidimensionalen Druckbild 3 wird ein Teil des Lichtes absorbiert. Der nicht absorbierte Lichtanteil durchdringt die durchscheinende (lasierende) Farbschicht und wird abgeschwächt. Der verbleibende Rest wird von der Blechoberfläche, auf die das Densitometer 6 durch Weißabgleich geeicht ist, remittiert, d.h. diffus reflektiert oder gestreut. Von dem Streulicht durchläuft nochmals ein Teil die Farbschicht und wird weiter abgeschwächt. Ein Linsensystem 11 fängt die Lichtstrahlen auf, die aus der Farbschicht kommen und leitet sie auf einen Empfänger (Fotodiode 12). Die von der Fotodiode 12 empfangene Lichtmenge wird in elektrische Energie umgewandelt. Die nachgelagerte Elektronik 13 vergleicht den Messstrom mit einem Referenzwert (Remission eines Absolutweiß). Die Differenz ist die Grundlage für die Errechnung des Absorptionsverhaltens der gemessenen Farbschicht. Auf dem Display 14 des Densitometers 6 erscheint die gemessene Farbdichte. Da der Farbort und die Pigmentkonzentration einer als Druckfarbe verwendeten Skalenfarbe (CMYK) in einem bestimmten Rahmen normiert ist, bleibt als einzige Variable zur Beeinflussung der Farbdichte die Farbschichtdicke FD. Somit ist die gemessene Farbdichte ein relatives Maß für die Farbschichtdicke FD im Druckbild 3.

Die densitometrisch bestimmten relativen Farbschichtdicken FD im dreidimensionalen Druckbild 3 lassen sich daraufhin in ein Modell des herzustellenden dreidimensionalen Blechteils als topografische Erhebungen übertragen, wobei mit einer Visualislerungseinrichtung das dreidimensionale Druckbild 3 in einer plausiblen Darstellungsform (z. B. als relatives dreidimensionales Druckgebirge) wiedergegeben werden kann. Indem die Höhen der topografischen Erhebungen des Druckbildes 3 auf einen tolerierten Werkzeugspalt bezogen werden, lässt sich anschließend ermitteln, ob und wenn ja, in welchen Flächenbereichen und mit welchen Abweichungen der tolerierte Werkzeugspalt verletzt wird. Die Basis bildet dabei das dreidimensionale Modell der Werkzeugform.

Die ermittelten und ggf. visualisierten Erhebungen im Druckbild 3 werden nachfolgend in einem achten Verfahrensschritt als X-Y-Kontur digitalisiert und zum Werkstückkoordinatensystem transformiert. Ein mechanisches Abtragen der Werkzeugformen um eine relative Schichtdicke kann dann innerhalb der X-Y-Kontur in klassifizierten Objektbereichen automatisiert erfolgen, beginnend mit dem größten Aufmaß.

Vorstellbar ist in diesem Zusammenhang, die Steuerung des Densitometers 6 für die Schichtdickenmessung und -auswertung über externe elektrische Verbindungen mit der Steuerung einer Nachbearbeitungseinrichtung, insbesondere einer Schleifmaschine, zu verknüpfen, sodass die errechneten Abweichungen zwischen den Höhen der Erhebungen im Druckbild 3 und dem tolerierten Werkzeugspalt zu einer entsprechenden Anpassung der von der jeweiligen Werkzeugoberfläche abzutragenden Materialstärke führen.

Die vorbeschriebenen Verfahrensschritte werden so lange wiederholt, bis das dreidimensionale Druckbild 3 definierten Qualitätsmerkmalen im Hinblick auf eine homogene vorgegebene Farbschichtdicke FD entspricht. Eine Korrelation zwischen Farbunterschieden und Schichtdicken wird somit erfindungsgemäß dem subjektiven Ermessen des jeweiligen Werkers entzogen. Stattdessen wird eine Korrelation zwischen relativen Farbunterschieden und der Schichtdicke in klassifizierten Objektbereichen als Funktion darstellbar und somit vergleichbar. Dies bringt zum einen qualitative Vorteile mit sich, da die Nacharbeit gezielt auf Basis objektiver (densitometrischer) Messergebnisse durchführbar ist, und ermöglicht zum anderen auch wirtschaftliche Vorteile, da der zu betreibende Zeitaufwand für die Werkzeugeinarbeitung deutlich reduziert wird.

Das erfindungsgemäße Verfahren kann überall dort zur Anwendung gelangen, wo die Einarbeitung von blechverarbeitenden Umformwerkzeugen zur Einstellung des Werkzeugspaltes unter Verwendung von Tuschierfarbe 1 stattfindet. Hier wäre als technisches Anwendungsgebiet in erster Linie der Werkzeug- und Formenbau für die Herstellung von umgeformten Blechkomponenten (insbesondere im Bereich Automobilbau, aber auch in anderen industriebereichen, wie Maschinentechnik, Luft- und Raumfahrt oder "Weiße Ware") zu nennen.

### Bezugszeichenliste

- 1: Tuschierfarbe
- 2: dreidimensionales (tiefgezogenes) Blechteil
- 3: dreidimensionales Druckbild
- 4: zweidimensionales Farbbild
- 5: korrigiertes zweidimensionales Farbbild
- 6: Densitometer
- 7: ebener Spiegel
- 8: homogene Beleuchtung
- 9: Lichtquelle
- 10: Optik
- 11: Linsensystem
- 12: Fotodiode
- 13: Elektronik
- 14: Display
- FD: Farbschichtdicke

## Patentansprüche

1. Verfahren zum Einarbeiten eines Umformwerkzeuges unter Verwendung von Tuschierfarbe (1), umfassend die Schritte:
a) Umformen einer unbestrichenen Blechplatine mittels des Umformwerkzeuges zu einem ersten dreidimensionalen Blechteil ohne dreidimensionales Druckbild,
b) Umformen einer gleichmäßig mit Tuschierfarbe (1) bestrichenen Blechplatine mittels des Umformwerkzeuges zu einem zweiten dreidimensionalen Blechteil (2) mit einem dreidimensionalen Druckbild (3),
c) Aufnehmen eines zweidimensionalen Referenzfarbbildes von dem ersten dreidimensionalen Blechteil und Aufnehmen eines zweidimensionalen Farbbildes (4) von dem zweiten dreidimensionalen Blechteil (2) mittels einer Bildaufnahmeeinrichtung,
d) Korrigieren des zweidimensionalen Farbbildes (4) unter Verwendung des zweidimensionalen Referenzfarbbildes,
e) Zuordnen von Objektbereichen des korrigierten zweidimensionalen Farbbildes (5) zu Objektklassen mittels einer Bildverarbeitungseinrichtung,
f) Messen der Farbschichtdicken (FD) des dreidimensionalen Druckbildes (3) in allen klassifizierten Objektbereichen mittels eines Densitometers (6),
g) Übertragen der gemessenen Farbschichtdicken (FD) in ein Modell des herzustellenden dreidimensionalen Blechteils als topografische Erhebungen,
h) Nachbearbeiten des Umformwerkzeuges entsprechend den Höhen der topografischen Erhebungen zur Verbesserung des dreidimensionalen Druckbildes (3).

2. Verfahren nach Anspruch 1, wobei in den Schritten a) und b) die Blechplatine in einer Presse, insbesondere einer Tuschier- bzw. Erprobungspresse, zwischen einem auf einem Untergestell angeordneten Unterwerkzeug und einem an einem Pressenoberteil angeordneten Oberwerkzeug zu dem dreidimensionalen Blechteil (2) tiefgezogen wird und wobei während des Tiefziehvorganges das Blech von einem Niederhalter fixiert wird.

3. Verfahren nach Anspruch 1 oder 2, wobei das dreidimensionale Blechteil (2) zum Aufnehmen des zweidimensionalen Farbbildes (4) und Referenzfarbbildes im Schritt c) auf einen ebenen Spiegel (7) gelegt wird, der senkrecht zur optischen Achse der Bildaufnahmeeinrichtung verläuft.

4. Verfahren nach zumindest einem der vorhergehenden Ansprüche 1 bis 3, wobei das zweidimensionale Farbbild (4) und Referenzfarbbild im Schritt c) bei derselben homogenen Beleuchtung (8) aufgenommen werden.

5. Verfahren nach zumindest einem der vorhergehenden Ansprüche 1 bis 4, wobei im Schritt d) Farbunterschiede innerhalb des zweidimensionalen Farbbildes (4), die sich aufgrund unterschiedlicher Beleuchtungsintensität und/oder aufgrund unterschiedlicher Streuungs- und/oder Reflexionseigenschaften der Oberfläche des dreidimensionalen Blechteils (2) und/oder aufgrund unterschiedlicher Brechung und/oder Reflexion der Tuschierfarbe (1) ergeben, ausgeglichen werden.

6. Verfahren nach zumindest einem der vorhergehenden Ansprüche 1 bis 5, wobei die Bildverarbeitungseinrichtung im Schritt e) das korrigierte zweidimensionale Farbbild (5) in Bildelemente zerlegt, benachbarte Bildelemente mit gleichen Eigenschaften zu Objektbereichen zusammenfasst und aus den Objektbereichen Klassifikationsmerkmale ableitet, anhand derer die Objektbereiche vordefinierten Objektklassen zugeordnet werden.

7. Verfahren nach zumindest einem zumindest einem der vorhergehenden Ansprüche 1 bis 6, wobei der Farbort und die Pigmentkonzentration der Tuschierfarbe (1) normierte feste Größen sind und die im Schritt f) gemessene Farbschichtdicke (FD) als einzige variable Größe die Farbdichte des dreidimensionalen Druckbildes (3) beeinflusst.

8. Verfahren nach zumindest einem der vorhergehenden Ansprüche 1 bis 7, wobei im Schritt f) das Densitometer (6) im Lot zur zu vermessenden Oberfläche ausgerichtet wird und die Messung der Farbschichtdicke (FD) als relative Messung durch Vergleich des jeweiligen Messstromes mit einem Referenzwert, insbesondere ermittelt bei Remission eines Absolutweiß, realisiert wird.

9. Verfahren nach zumindest einem der vorhergehenden Ansprüche 1 bis 8, wobei die im Schritt g) ermittelten topografischen Erhebungen auf einen vorgegebenen tolerierten Werkzeugspalt bezogen und Abweichungen zwischen den Höhen der topografischen Erhebungen und diesem Werkzeugspalt errechnet werden und wobei im Schritt h) diese errechneten Abweichungen an eine Steuerung einer Nachbearbeitungseinrichtung, insbesondere einer Schleifmaschine, zur entsprechenden Nachbearbeitung des Umformwerkzeuges übergeben werden.

10. Verfahren nach zumindest einem der vorhergehenden Ansprüche 1 bis 9, wobei nach Schritt g) basierend auf einem dreidimensionalen Modell der Werkzeugform mit einer Visualisierungseinrichtung eine Visualisierung des dreidimensionalen Druckbildes (3), beispielsweise in Form eines relativen dreidimensionalen Druckgebirges, durchgeführt wird.

11. Verfahren nach zumindest einem der vorhergehenden Ansprüche 1 bis 10, wobei die im Schritt g) ermittelten topografischen Erhebungen als X-Y-Kontur digitalisiert vorliegen und in ein Werkstückkoordinatensystem transformiert werden und wobei im Schritt h) ein mechanisches Abtragen der Werkzeugform innerhalb der X-Y-Kontur in den klassifizierten Objektbereichen, beginnend mit dem größten Aufmaß, automatisiert erfolgt.

## Claims

1. A method for working in a forming tool using marking ink (1), comprising the steps of
a) Forming an uncoated sheet metal blank by means of the forming tool into a first three-dimensional sheet metal part without a three-dimensional printed image,
b) Forming a sheet metal blank uniformly coated with marking ink (1) by means of the forming tool into a second three-dimensional sheet metal part (2) with a three-dimensional printed image (3),
c) Picking up a two-dimensional reference color image from the first three-dimensional sheet metal part and picking up a two-dimensional color image (4) from the second three-dimensional sheet metal part (2) by means of an image pickup device,
d) Correcting the two-dimensional color image (4) using the two-dimensional reference color image,
e) Assigning object areas of the corrected two-dimensional colour image (5) to object classes by means of an image processing device,
f) Measuring the ink layer thickness (FD) of the three-dimensional printed image (3) in all classified object areas by means of a densitometer (6),
g) Transferring the measured paint layer thicknesses (FD) into a model of the three-dimensional sheet metal part to be produced as topographic elevations,
h) Reworking of the forming tool according to the heights of the topographic elevations to improve the three-dimensional printed image (3).

2. The method according to claim 1, wherein in steps a) and b) the sheet metal blank is deep-drawn in a press, in particular a spotting or testing press, between a lower tool arranged on a lower frame and an upper tool arranged on an upper part of the press to form the three-dimensional sheet metal part (2), and wherein during the deep-drawing process the sheet metal is fixed by a holding-down device.

3. The method according to claim 1 or 2, wherein the three-dimensional sheet metal part (2) is placed on a plane mirror (7) which is perpendicular to the optical axis of the image pick-up device for picking up the two-dimensional colour image (4) and reference colour image in step c).

4. The method according to at least one of the preceding claims 1 to 3, wherein the two-dimensional colour image (4) and reference colour image in step c) are recorded under the same homogeneous illumination (8).

5. The method according to at least one of the preceding claims 1 to 4, wherein in step d) colour differences within the two-dimensional colour image (4), which result due to different illumination intensity and/or due to different scattering and/or reflection properties of the surface of the three-dimensional sheet metal part (2) and/or due to different refraction and/or reflection of the spot colour (1), are compensated.

6. The method according to at least one of the preceding claims 1 to 5, wherein the image processing device in step e) decomposes the corrected two-dimensional colour image (5) into picture elements, combines adjacent picture elements with the same properties to form object areas and derives classification features from the object areas, on the basis of which the object areas are assigned to predefined object classes.

7. The method according to at least one of at least one of the preceding claims 1 to 6, wherein the colour location and the pigment concentration of the marking ink (1) are standardised fixed variables and the ink layer thickness (FD) measured in step f) is the only variable variable which influences the colour density of the three-dimensional printed image (3).

8. The method according to at least one of the preceding claims 1 to 7, wherein in step f) the densitometer (6) is aligned perpendicular to the surface to be measured and the measurement of the paint layer thickness (FD) is realized as a relative measurement by comparing the respective measuring current with a reference value, in particular determined in the case of remission of an absolute white.

9. The method according to at least one of the preceding claims 1 to 8, wherein the topographic elevations determined in step g) are related to a predetermined tolerated tool gap and deviations between the heights of the topographic elevations and this tool gap are calculated and wherein in step h) these calculated deviations are transferred to a control of a finishing device, in particular a grinding machine, for the corresponding finishing of the forming tool.

10. The method according to at least one of the preceding claims 1 to 9, wherein after step g) a visualisation of the three-dimensional printed image (3), for example in the form of a relative three-dimensional pressure mountain, is carried out based on a three-dimensional model of the tool shape with a visualization device.

11. The method according to at least one of the preceding claims 1 to 10, wherein the topographic elevations determined in step g) are present in digital form as an X-Y contour and are transformed into a workpiece coordinate system, and wherein in step h) a mechanical removal of the tool shape within the X-Y contour in the classified object regions, beginning with the largest allowance, is carried out automatically.

## Revendications

1. Procédé d'ajustage d'un outil de formage à l'aide d'une matière de dressage (1), comprenant les étapes suivantes
a) Formage d'un flan de tôle non revêtu au moyen de l'outil de formage en une première pièce de tôle tridimensionnelle sans image imprimée tridimensionnelle,
b) Formage d'un flan de tôle uniformément revêtu de matière de dressage (1) au moyen de l'outil de formage pour obtenir une seconde pièce de tôle tridimensionnelle (2) avec une image imprimée tridimensionnelle (3),
c) Saisie d'une image couleur de référence bidimensionnelle à partir de la première pièce de tôle tridimensionnelle et saisie d'une image couleur bidimensionnelle (4) à partir de la seconde pièce de tôle tridimensionnelle (2) au moyen d'un dispositif de saisie d'images,
d) Correction de l'image couleur bidimensionnelle (4) en utilisant l'image couleur de référence bidimensionnelle,
e) Attribution de zones d'objets de l'image couleur bidimensionnelle corrigée (5) à des classes d'objets au moyen d'un dispositif de traitement d'image,
f) Mesure de l'épaisseur de la couche d'encre (FD) de l'image imprimée tridimensionnelle (3) dans toutes les zones d'objets classées au moyen d'un densitomètre (6),
g) Transfert des épaisseurs de couche de peinture mesurées (FD) dans un modèle de la pièce de tôle tridimensionnelle à produire en tant qu'élévations topographiques,
h) Retraitement de l'outil de formage en fonction des hauteurs des élévations topographiques pour améliorer l'image imprimée tridimensionnelle (3).

2. Procédé selon la revendication 1, dans lequel, au cours des étapes a) et b), le flan de tôle est embouti dans une presse, en particulier une presse à pointer ou une presse d'essai, entre un outil inférieur disposé sur un cadre inférieur et un outil supérieur disposé sur une partie supérieure de la presse pour former la pièce de tôle tridimensionnelle (2), et dans lequel, pendant le processus d'emboutissage, la tôle est fixée par un dispositif de maintien vers le bas.

3. Procédé selon les revendications 1 ou 2, dans lequel la pièce de tôle tridimensionnelle (2) est placée sur un miroir plan (7) qui est perpendiculaire à l'axe optique du dispositif de prise de vue pour la prise de l'image couleur bidimensionnelle (4) et de l'image couleur de référence à l'étape c).

4. Procédé selon au moins une des revendications 1 à 3 précédentes, dans lequel l'image couleur bidimensionnelle (4) et l'image couleur de référence de l'étape c) sont enregistrées sous le même éclairage homogène (8).

5. Procédé selon au moins l'une des revendications 1 à 4 précédentes, dans lequel, à l'étape d), on compense les différences de couleur dans l'image couleur bidimensionnelle (4), qui résultent d'une intensité d'éclairage différente et/ou de propriétés de diffusion et/ou de réflexion différentes de la surface de la pièce de tôle tridimensionnelle (2) et/ou d'une réfraction et/ou d'une réflexion différente de la couleur du point (1).

6. Procédé selon au moins l'une des revendications 1 à 5 précédentes, dans lequel le dispositif de traitement d'images à l'étape e) décompose l'image couleur bidimensionnelle corrigée (5) en éléments d'image, combine des éléments d'image adjacents ayant les mêmes propriétés pour former des zones d'objet et dérive des caractéristiques de classification des zones d'objet, sur la base desquelles les zones d'objet sont affectées à des classes d'objet prédéfinies.

7. Procédé selon au moins l'une des revendications 1 à 6 précédentes, dans lequel l'emplacement de la couleur et la concentration en pigments de l'encre de marquage (1) sont des variables fixes normalisées et l'épaisseur de la couche d'encre (FD) mesurée à l'étape f) est la seule variable qui influence la densité de couleur de l'image imprimée tridimensionnelle (3).

8. Procédé selon au moins l'une des revendications 1 à 7 précédentes, dans lequel, à l'étape f), le densitomètre (6) est orienté perpendiculairement à la surface à mesurer et la mesure de l'épaisseur de la couche de peinture (FD) est réalisée en tant que mesure relative en comparant le courant de mesure respectif avec une valeur de référence, déterminée notamment en cas de rémission d'un blanc absolu.

9. Procédé selon au moins l'une des revendications 1 à 8 précédentes, dans lequel les élévations topographiques déterminées à l'étape g) sont liées à un écartement d'outil toléré prédéterminé et des écarts entre les hauteurs des élévations topographiques et cet écartement d'outil sont calculés et dans lequel à l'étape h) ces écarts calculés sont transférés à une commande d'un dispositif de finition, en particulier une machine à rectifier, pour la finition correspondante de l'outil de formage.

10. Procédé selon au moins une des revendications 1 à 9 précédentes, dans laquelle après l'étape g), une visualisation de l'image imprimée tridimensionnelle (3), par exemple sous la forme d'une montagne de pression relative tridimensionnelle, est effectuée sur la base d'un modèle tridimensionnel de la forme de l'outil avec un dispositif de visualisation.

11. Procédé selon au moins l'une des revendications 1 à 10 précédentes, dans lequel les élévations topographiques déterminées à l'étape g) sont présentes sous forme numérique en tant que contour X-Y et sont transformées en un système de coordonnées de la pièce, et dans lequel à l'étape h), un enlèvement mécanique de la forme de l'outil à l'intérieur du contour X-Y dans les zones classées de l'objet, en commençant par la plus grande surépaisseur, est effectué automatiquement.
